# EUROPÄISCHE PATENTSCHRIFT

(11) **EP 2 102 453 B1**
(45) Veröffentlichungstag und Bekanntmachung des Hinweises auf die Patenterteilung: **31.08.2016**
(21) Anmeldenummer: 07856844.1
(22) Anmeldetag: 18.12.2007
(51) Int. Cl.: F01K 23/06

(54) **VERFAHREN UND ANLAGE ZUR ERZEUGUNG VON ELEKTRISCHER ENERGIE IN EINEM GAS- UND DAMPFTURBINEN (GUD) - KRAFTWERK**
METHOD AND INSTALLATION FOR GENERATING ELECTRIC ENERGY IN A GAS/STEAM TURBINE POWER PLANT
PROCÉDÉ ET INSTALLATION DE PRODUCTION D'ÉNERGIE ÉLECTRIQUE DANS UNE CENTRALE À CYCLE COMBINÉ

(30) Priorität: 15.01.2007 AT 732007
(43) Veröffentlichungstag der Anmeldung: 23.09.2009
(73) Patentinhaber: Primetals Technologies Austria GmbH, 4031 Linz (AT)
(72) Erfinder: KEPPLINGER, Leopold, Werner, A-4060 Leonding (AT)
(74) Vertreter: Metals@Linz
(86) Internationale Anmeldenummer: PCT/EP2007/011117
(87) Internationale Veröffentlichungsnummer: WO 2008/086877

(56) Entgegenhaltungen:
- CA-A1- 2 081 189
- DE-A1- 3 642 619
- GB-A- 1 298 434
- US-A- 5 069 685
- US-A- 5 765 365
- US-A1- 2007 193 249

## Beschreibung

Die Erfindung betrifft ein Verfahren zur Erzeugung von elektrischer Energie in einem Gas- und Dampfturbinen (GuD) - Kraftwerk mit einem aus Kohlenstoffträgern und sauerstoffhältigem Gas erzeugten Vergasungsgas sowie eine Anlage zur Durchführung dieses Verfahrens.

### Hintergrund der Erfindung

Etwa Mitte des 20. Jahrhunderts wurden die ersten Kraftwerke mit einer Gasturbine und nachgeschalteter Abhitzeverwertung in einer Dampfturbine errichtet. Sie werden in der Technik als GuD (Gas- und Dampfturbinen)-Kraftwerke oder auch CC (Combined Cycle)-Kraftwerke bezeichnet. Diese Kraftwerke verwenden als Energieträger durchwegs Erdgas, das in Gasturbinen mit befriedigendem Wirkungsgrad in mechanische Energie umgesetzt werden kann. Durch die hohe Reinheit des Erdgases ist auch der Betrieb ohne größere Korrosionsprobleme, selbst bei hohen Schaufeltemperaturen der Turbine, möglich. Das heiße Abgas der Gasturbine wird in einem nachgeschalteten Dampfkessel zur Erzeugung hochgespannten Dampfs zum Einsatz in nachgeschalteten Dampfturbinen verwendet. Durch diese Kombination lassen sich die derzeit höchsten elektrischen Wirkungsgrade für thermische Kraftwerke erzielen.

Andere, vor allem feste Brennstoffe, wie Kohle, waren für diese Technik nicht einsetzbar. Die nachstehend beschriebene IGCC-Technik (Integrated Gasification Combined Cycle) soll dieses Problem lösen. Bei dieser Technik wird eine Kohlevergasungsanlage zur Herstellung des für die Gasturbine benötigten Verbrennungsgases eingesetzt. Durch Vergasen von Kohle kann ein sauberes Gas erzeugt werden, das den Anforderungen der Gasturbinen genügt.

Die Aufbereitung des bei der Vergasung anfallenden Rohgases ist aber bei den herkömmlichen Vergasern sehr aufwändig. Es müssen staubförmige Verunreinigungen ausgewaschen werden. Darüberhinaus sind, abhängig vom Vergasungsverfahren, alle kondensierbaren organischen Kohlenwasserstoffe zu entfernen. Ein großes Augenmerk ist auch dem Schwefel, der bei Vergasung als H₂S und COS anfällt, zu schenken. Durch Gasreinigungsstufen kann jedoch eine für Gasturbinen akzeptable Reinheit erreicht werden.

Als Abfallstoffe müssen Schwefel, Kohleasche sowie organische und anorganische Schadstoffe ausgeschleust und einer sicheren Deponierung oder Unschädlichmachung zugeführt werden. Dadurch entstehen hohe Entsorgungskosten. Bei einer Abscheidung von Kohlenstoffdioxid zur Sequestrierung sind durch die relativ geringen Kohlenstoffdioxidkonzentrationen im Rauchgas aufwändige, teure und nicht sehr effektive Anlagen nötig. Es wird daher durch die sogenannte Shift- Reaktion Kohlenmonoxid in Kohlenstoffdioxid umgewandelt, was einen zusätzlichen Anlagenteil bedingt.

### Stand der Technik

### Verfahrensbeschreibung des IGCC - Prozesses eines Siemens-Konzeptes

Lufttrennung: Für die Vergasung ist reiner Sauerstoff nötig. Dazu wird Luft vom Verdichter der Gasturbine oder mit einem separaten Verdichter auf 10 - 20 bar komprimiert und verflüssigt. Die Abtrennung des Sauerstoffs erfolgt durch Destillation bei Temperaturen um -200°C.

Vergasung: Dabei entsteht ein Rohgas, das hauptsächlich aus Kohlenmonoxid (CO) und Wasserstoff (H₂) besteht. Mit Wasserdampf wird CO in CO₂ und weiteren Wasserstoff überführt. Zur Vergasung von Festbrennstoffen, wie Kohle oder Petrolkoks, gibt es drei Verfahrensprinzipien, von denen bei IGCC die Flugstromvergasung dominiert: Kohlenstaub wird unter Druck mit einem Fördergas wie Stickstoff einem Brenner zugeführt und im Vergaser mit Sauerstoff und Wasserdampf zum Synthesegas umgewandelt.

Rohgas-Kühlung: Das Synthesegas muss vor der weiteren Behandlung abgekühlt werden. Hierbei entsteht Dampf, der in der Dampfturbine der GuD-Anlage zur Stromerzeugung beiträgt.

Reinigung: Nach der Abkühlung des Gases halten Filter zunächst Aschepartikel zurück, anschließend kann bei Bedarf auch Kohlendioxid entzogen werden. Andere Schadstoffe, wie Schwefel oder Schwermetalle, werden ebenfalls durch chemische und physikalische Verfahren gebunden. Das bringt gleichzeitig die nötige Brennstoff-Reinheit für den Betrieb der Gasturbinen.

Verbrennung: Das wasserstoffreiche Gas wird vor der Brennkammer der Gasturbine mit Stickstoff aus der Lufttrennung oder mit Wasserdampf vermischt. Das senkt die Verbrennungstemperatur und unterdrückt so weitgehend die Bildung von Stickoxiden. Das dann aus der Verbrennung mit Luft entstehende Rauchgas strömt auf die Schaufeln der Gasturbine. Es besteht im wesentlichen aus Stickstoff, CO₂ und Wasserdampf. Durch die Vermischung mit Stickstoff oder Wasser wird der spezifische Energieinhalt des Gases auf rund 5000 kJ/kg reduziert. Erdgas hat hingegen den zehnfachen Energieinhalt. Deshalb muss bei gleicher Leistung der Brennstoff-Massenstrom durch die Gasturbinen-Brenner beim IGCC-Kraftwerk rund zehnmal höher sein.

Abgas-Kühlung: Nach Entspannung des Rauchgases in der Gasturbine und anschließender Abwärmenutzung in einem Dampferzeuger wird das Abgas an die Atmosphäre abgegeben. Die Dampfströme aus der Rohgas- und Abgaskühlung werden kombiniert und gemeinsam der Dampfturbine zugeleitet. Nach der Entspannung in der Dampfturbine gelangt der Dampf über den Kondensator und den Speisewasserbehälter zurück in den Wasser- bzw. Dampf-Kreislauf. Gas- und Dampfturbine sind mit einem Generator gekoppelt, in dem die Umwandlung in elektrische Energie erfolgt.

Durch die hohen Verbrennungstemperaturen in der Brennkammer der Gasturbine entsteht durch die Reaktion mit dem Stickstoff eine hohe NO_{X}-Belastung im Abgas, welche durch sekundäre Maßnahmen, wie SCR-Verfahren, entfernt werden muss.

Eine weitere Einschränkung für ein mit Kohlegas betriebenes GuD-Kraftwerk ergibt sich auch aus dem derzeit beschränkten Vergasungsleistungen der am Markt vorhandenen Vergasungsverfahren.

Drei Verfahrensvarianten haben sich am Markt eingeführt:
- Festbettverfahren für stückige Kohle
- Wirbelschichtverfahren für feinkörnige Kohle und
- Flugstaubverfahren für Kohlestäube

Von all diesen Verfahren sind zahlreiche Verfahrensvarianten entwickelt worden, welche z.B. unter Druck arbeiten oder Flüssigschlackeaustrag etc. haben. Einige davon sind nachfolgend beschrieben.

### Stückkohlevergasung: LURGI

Dieser Vergasertyp hat seit vielen Jahrzehnten Tradition und wird weltweit in der Kohlevergasung verwendet. Neben Steinkohle kann auch Braunkohle unter modifizierten Betriebsbedingungen eingesetzt werden. Ein Nachteil dieses Verfahrens besteht im Anfall einer Reihe von Nebenprodukten, wie Teere, Schlämme und anorganischen Verbindungen wie Ammoniak. Dadurch ist eine aufwändige Gasreinigung und -behandlung notwendig.

Auch müssen diese Nebenprodukte verwertet oder entsorgt werden. Als Vorteil ist die lange Erfahrung mit diesem Aggregat zu werten, welches seit über 70 Jahren gebaut wird. Es kann wegen der Festbettfahrweise jedoch nur stückige Kohle eingesetzt werden. Als Vergasungsmittel dient ein Gemisch aus Sauerstoff und/oder Luft und Wasserdampf. Der Wasserdampf ist zur Moderierung der Vergasungstemperatur nötig, um den Ascheschmelzpunkt nicht zu überschreiten, da dieser Prozess mit einem Festascheaustrag arbeitet. Dadurch wird der Wirkungsgrad der Vergasung nachteilig beeinflusst.

Durch die Gegenstromfahrweise reicht das Temperaturprofil der Kohle von Umgebungstemperatur bei der Aufgabe bis zur Vergasungstemperatur knapp über dem Ascherost. Dies bedingt, dass Pyrolysegase und Teere mit dem Rohgas den Vergaser verlassen und in einer nachgeschalteten Gasreinigung entfernt werden müssen. Es fallen dabei ähnliche Nebenprodukte wie in einer Kokerei an.

Die größten dieser Vergaser setzen etwa 24 Tonnen Kohle (daf = dry and ash free)/Stunde durch und erzeugen ca. 2250m³ₙ Rohgas/Tonne Kohle (daf). Es entstehen als Nebenprodukt 40-60 kg Teer/Tonne Kohle (daf). Der Sauerstoffbedarf liegt bei 0,14 m³ₙ/ m³ₙ Gas. Der Betriebsdruck liegt bei 3 Mpa. Die Verweilzeit der Kohle im Vergaser liegt bei 1-2 Stunden. Die größten Vergaser haben einen inneren Durchmesser von 3,8 m. Über 160 Einheiten sind bislang in Betrieb genommen worden.

Gaszusammensetzung bei Steinkohleeinsatz (Südafrika)

| | |
|---|---|
| CO₂ | 32,0 % |
| CO | 15,8 % |
| H₂ | 39.8 % |
| CH₄ | 11,8 % |
| CₙHₘ | 0,8 % |

### Wirbelschichtvergaser für Feinkohle

Derzeit sind verschiedene Bauarten verfügbar, wobei der Hochtemperatur-Winkler-Vergaser als die gegenwärtig am weitesten entwickelte Variante anzusehen ist, da er einen Druck von etwa 1,0 MPa liefert und bei höheren Temperaturen als andere Wirbelschichtvergaser arbeitet. Es sind auf Basis Braunkohle gegenwärtig zwei Einheiten in Betrieb. Der Ascheaustrag ist trocken. Die Leistung ist aber mit 1 Tonne Kohle/Stunde zu gering, um den Gasbedarf einer IGCC-Anlage decken zu können. Der herkömmliche Winkler-Vergaser liefert zu geringe Drücke von etwa 0,1 MPa. Die Leistung dieser Vergaser liegt bei etwa 20 Tonnen Kohle/Stunde.

### Vergaser mit Flüssig-schlackeabzug für Kohle und Erdöl-Rückstände

Für die Herstellung von Reduktionsgas können auch feinkörnige Kohlenstoffträger verwendet werden. Gemeinsames Kennzeichen dieser Verfahren ist eine weitgehend flüssige Schlacke. Folgende Verfahren werden heute angewandt:
Koppers-Totzek-Verfahren
   Als Einsatz wird Feinkohle und Sauerstoff verwendet. Zur Temperatursteuerung wird Wasserdampf zugesetzt. Die Schlacke wird in einem Wasserbad granuliert. Die hohe Gastemperatur wird für die Dampfgewinnung eingesetzt. Der Druck ist für IGCC-Kraftwerke zu gering.
Prenflo-Verfahren
   Als Einsatz wird Feinkohle und Sauerstoff verwendet. Es handelt sich dabei um eine Weiterentwicklung des Koppers-Totzek- Verfahrens, welches unter einem Druck von 2,5 MPa arbeitet und für IGCC-Kraftwerke geeignet wäre. Kommerzielle Großanlagen gibt es bis jetzt noch nicht.
Shell-Verfahren
   Als Einsatz wird Feinkohle und Sauerstoff verwendet. Auch dieses Verfahren ist in größeren Einheiten noch nicht kommerziell verfügbar. Durch seinen Arbeitsdruck von 2,5 MPa wäre es für IGCC-Kraftwerke geeignet.
Texaco-Verfahren
   Dieses Verfahren ist in mehreren Einheiten bereits seit Jahren in Betrieb. Die Durchsatzleistung mit etwa 6-8 Tonnen Kohle (daf)/Stunde ist jedoch für IGCC-Kraftwerke mit größerer Leistung zu gering. Es müssen mehrere Anlagen parallel betrieben werden, was hohe Investitionskosten bedeutet. Dadurch wird die Wirtschaftlichkeit negativ beeinflusst. Der Arbeitsdruck liegt bei 8 MPa.
OxyFuel-Verbrennung
   Bei diesem Verfahren wird keine Vergasung sondern eine Verbrennung angestrebt. Bei den OxyFuel-Verfahren wird der Stickstoff durch Luftzerlegung aus der Verbrennungsluft entfernt. Da eine Verbrennung mit reinem Sauerstoff zu viel zu hohen Verbrennungstemperaturen führen würde, wird ein Teil des Abgases zurückgeführt und ersetzt somit den Luftstickstoff. Das abzuführende Abgas besteht im Wesentlichen nur noch aus CO₂, nachdem der Wasserdampf auskondensiert und Verunreinigungen wie SOx, NOx und Staub abgeschieden wurden.

Die Luftverflüssigung für die Bereitstellung des Sauerstoffes wird zwar bereits im großtechnischen Maßstab bis etwa 5000 Tonnen O₂/Tag, die dem Verbrauch eines 300 MWₑ Kohlekraftwerks entsprechen, eingesetzt. Das große Problem derartiger Anlagen besteht jedoch in dem hohen energetischen Aufwand von etwa 250-270 kWh/Tonne O₂, der mit zunehmenden Reinheitsanforderungen noch ansteigt. Auch für die Schlacke, welche aus den Kohleaschen gebildet wird, besteht kein gesicherter Verwertungsweg.

### Schmelzreduktions-Verfahren

Bei Schmelzreduktionsverfahren zur Herstellung von Roheisen aus Kohle und Erzen, hauptsächlich Eisenerzen, fallen Exportgase mit unterschiedlicher Reinheit und Heizwert an, welche einer thermischen Verwertung zugeführt werden können. Vor allem beim COREX^{®} und FINEX^{©}-Verfahren ist das Exportgas von einer für die Verbrennung in Gasturbinen idealen Qualität. Sowohl der Schwefel, wie auch organische und anorganische Schadstoffe sind aus dem Gas innerhalb des metallurgischen Prozesses entfernt worden. Es kann das Exportgas dieser Prozesse uneingeschränkt für ein GuD-Kraftwerk verwendet werden.

Eine CC-Anlage mit einer Frame 9E Gas-Turbine mit einer Leistung von 169 MW wird bei der neuen COREX^{®} C-3000 Anlage bei Baoshan Steel in China durch General Electric errichtet.

Die Idee einer Koppelung zwischen einer COREX^{®} -Anlage und einer energieeffizienten Kraftwerksanlage nach dem CC-System ist nicht neu. Bereits 1986 wurde ein Patent (EP 0 269 609 B1) für diese Form der höchst effizienten Energieumwandlung angemeldet und erteilt. Ein weiteres Patent (AT 392 079 B) beschreibt ein Verfahren ähnlicher Art, wobei durch Trennung von Fein- und Grobfraktion die Aufinahlung von Kohle vermieden werden kann.

Da für einen vorteilhaften Betrieb eines IGCC-Kraftwerkes reiner Sauerstoff für die Vergasung der Kohlenstoffträger benötigt wird, ist eine integrierte Erzeugung von Sauerstoff mittels der in der Vergasungsanlage hergestellten Brenngase möglich. Dies ist in der deutschen Patentschrift DE 39 08 505 C2 beschrieben.

In der Patentschrift EP 90 890 037.6 ist ein "Verfahren zur Erzeugung von brennbaren Gasen in einem Einschmelzvergaser" beschrieben.

Nachteilig an all diesen angeführten Verfahren ist, dass bei der Verbrennung des Vergasungsgases in der Gasturbine Luft zum Einsatz kommt. Dadurch ergeben sich einerseits unvorteilhaft große Abgasmengen, welche durch die limitierte Endtemperatur in der Nutzungskette bis zum Abhitzekessel hohe enthalpische Wärmeverluste durch das Abgas bedingen, andererseits wird dadurch der hohe Wirkungsgrad von CC-Kraftwerken vermindert. Das Abgas besitzt einen hohen Stickstoffgehalt bis über 70% was eine Sequestrierung von CO₂ erheblich erschwert und daher große und somit teure Abtrennanlagen erfordert.

Beim OxyFuel-Verfahren wird zwar auch CO₂ direkt in den Prozess rückgeführt, jedoch muss erst eine Gasreinigung von den Schadstoffen erfolgen, welche sehr aufwändig ist. Die Schadstoffe müssen ausgeschleust werden und stellen somit eine Umweltbelastung dar. Es gibt bisher noch keine betriebsfähige Anlage. Auch das Problem der Schlackeverwertung ist nicht gelöst.

Aus der DE 36 42 619 A1 ist ein Kohlevergaser mit einer Entschwefelungseinrichtung bekannt, wobei das entschwefelte Kohlegas in einer Brennkammer verbrannt, einer Turbine zugeführt und die Abwärme zur Erzeugung von Dampf für eine Dampfturbine genutzt wird. Nachteilig ist dabei, dass die gesamten Feststoffe aus der Entschwefelung in den Kohlevergaser gelangen und als Abfallstoff ausgeschleust werden müssen.

Die US 5,765,365 offenbart die Entschwefelung eines Verbrennungsgases in einem Entschwefelungsofen, wobei mittels Kalk entschwefelt wird, der wiederum in einem Oxidationsofen oxidiert wird. Nachteilig sind dabei die dabei anfallenden Entschwefelungsmittel, die als Problemstoffe anfallen.

Aus der US 5,069,685 ist eine Feststoffentschwefelung in einem Absorber, der als Moving bed oder als Fluidized bed ausgeführt sein kann, zu entnehmen. Zur Regeneration des Sorbents muss dieses in einen Regenerator verbracht werden. Nachteilig an dieser Lösung ist dass das Sorbent immer wieder regeneriert werden muss, wobei große Mengen an Abgas entstehen, welches wiederum mit Schwefel belastet wird.

Die GB A 1 298 434 offenbart, dass es im Vergaser zu einer Abscheidung von Eisen aus der Kohlenasche kommt und dass dieses abgezogen werden muss.

### Aufgabe der Erfindung

Die vorliegende Erfindung bezweckt die Vermeidung und Überwindung der oben genannten, im Stand der Technik auftretenden Probleme und Nachteile und stellt sich die Aufgabe, ein Verfahren zur Erzeugung von elektrischer Energie in einem Gas- und Dampfturbinen (GuD) - Kraftwerk bereitzustellen, das eine Energiegewinnung mit möglichst geringem Schadstoffanfall und einem erhöhten Kohlenstoffdioxidgehalt im Abgas zwecks ökonomischerer Sequestrierung ermöglicht. Insbesondere sollen alle anorganischen Schadstoffe wie auch organische Verbindungen aus der Kohle innerhalb des Prozesses unschädlich gemacht werden können und gleichzeitig nicht zerstörbare Schadstoffe, wie Schwefel oder schädliche Bestandteile der Aschen von Brennstoffen, in wiederverwertbare Produkte eingebunden werden.

Diese Aufgabe wird bei einem Verfahren der eingangs genannten Art erfindungsgemäß dadurch gelöst, dass
- die Kohlenstoffträger in einer Schmelzvergasungszone mit Sauerstoff oder einem hoch sauerstoffhältigen Gas, das einen Sauerstoffanteil von mindestens 95 Vol.%, vorzugsweise mindestens 99 Vol.%, aufweist, vergast werden,
- das so erzeugte Vergasungsgas durch eine Entschwefelungsmittel enthaltende Entschwefelungszone geleitet wird, wobei verbrauchtes Entschwefelungsmittel in die Schmelzvergasungszone chargiert und nach Bildung einer Flüssigschlacke abgezogen wird,
- das entschwefelte Vergasungsgas, vorzugsweise nach Reinigung und Kühlung, in einer Brennkammer zusammen mit reinem Sauerstoff verbrannt wird und die entstehenden Verbrennungsgase, H₂O und CO₂, zur Energieerzeugung in die Gasturbine geleitet werden,
- die Verbrennungsgase nach der Gasturbine in einem Dampfkessel in Wasserdampf und Kohlendioxid getrennt werden,
- der Wasserdampf anschließend in eine Dampfturbine geleitet wird, und
- das Kohlendioxid zur Temperatureinstellung in die Brennkammer zumindest teilweise rückgeführt wird.

Gemäß einer bevorzugten Ausführungsform wird in der Entschwefelungszone als Hilfsstoff zusätzlich Eisen und/oder Eisenerz eingesetzt, das gemeinsam mit dem verbrauchten Entschwefelungsmittel in die Schmelzvergasungszone chargiert, dort geschmolzen und abgezogen wird.

Vorzugsweise wird dabei das aus der Schmelzvergasungszone abgezogene Eisen in die Entschwefelungszone rückgeführt.

Eine weitere bevorzugte Ausführungsform der Erfindung ist dadurch gekennzeichnet, dass in der Entschwefelungszone zusätzlich Eisenerz eingesetzt wird, das Eisenerz in der Entschwefelungszone vorgewärmt und vorreduziert, gemeinsam mit dem verbrauchten Entschwefelungsmittel in die Schmelzvergasungszone chargiert, dort fertig reduziert, aufgeschmolzen und als Roheisen abgezogen wird.

Besonders bevorzugt wird hierbei die Entschwefelung des Vergasergases sowie die Vorerwärmung und Vorreduktion des Eisenerzes in zwei oder mehreren hintereinandergeschalteten Wirbelschichtzonen durchgeführt, wobei das Eisenerz von Wirbelschichtzone zu Wirbelschichtzone geleitet wird und das Vergasergas die Wirbelschichtzonen in Gegenrichtung zum Eisenerz durchströmt.

In der Schmelzvergasungszone wird vorzugsweise eine Temperatur >800°C, vorzugsweise >850°C, eingestellt.

Vorteilhafterweise wird/werden für alle Spülungen im Prozess CO₂ oder Mischungen aus CO, H₂, CO₂ und Wasserdampf eingesetzt.

Vorzugsweise wird die in der Schmelzvergasungszone gebildete Flüssigschlacke in der Zementerzeugung eingesetzt.

Die erfindungsgemäße Anlage zur Durchführung des obigen Verfahrens, welche einen Vergaser für Kohlenstoffträger, der eine Zuführung für Kohlenstoffträger, eine Zuleitung für ein sauerstoffhältiges Gas, eine Ableitung für Flüssigschlacke und eine Ableitung für das erzeugte Vergasergas aufweist, eine Entschwefelungsvorrichtung, die eine Zuführung für Entschwefelungsmittel, eine Zuführung für das Vergasergas und eine Ableitung für das gereinigte Vergasergas aufweist, und eine kombinierte Gas- und Dampfturbinenkraftwerksanlage mit einer Brennkammer der Gasturbinenanlage, in welche eine Leitung für das gereinigte Vergasergas und eine Zuführung für sauerstoffhältiges Gas mündet, und einem Dampfkessel der Dampfturbinenanlage, in den eine von der Gasturbine ausgehende Leitung für die Verbrennungsgase mündet und der eine Ableitung für Rauchgase aufweist, umfasst, ist dadurch gekennzeichnet, dass
- der Vergaser als Schmelzvergaser mit einem Kohle- und/oder Charbett ausgebildet und mit einem Abstich für Flüssigschlacke versehen ist,
- die Zuleitung für das sauerstoffhältige Gas eine Zuleitung für Sauerstoff oder ein hoch sauerstoffhältiges Gas, das einen Sauerstoffanteil von mindestens 95 Vol.%, vorzugsweise mindestens 99 Vol.%, aufweist, ist,
- die Ableitung für das im Schmelzvergaser erzeugte Vergasergas in die Entschwefelungsvorrichtung mündet,
- die Entschwefelungsvorrichtung als mindestens ein Reaktor mit Wander- oder Wirbelbett ausgebildet ist, der mit dem Schmelzvergaser zur Zuführung von verbrauchtem Entschwefelungsmittel leitungsmäßig verbunden ist,
- die Zuführung für sauerstoffhaltiges Gas eine Zuführung für reinen Sauerstoff ist, und
- von der Ableitung für Rauchgase eine mit einer Regelvorrichtung versehene Zweigleitung abzweigt, die in der Brennkammer mündet.

Gemäß einer bevorzugten Ausführungsform weist der mindestens eine Entschwefelungsreaktor eine Zuführung für Eisen und/oder Eisenerz auf und ist im Schmelzvergaser zusätzlich ein Abstich für Roheisen vorgesehen.

Vorzugsweise ist der Abstich für Roheisen hierbei leitungsmäßig mit der Zuführung für Eisen und/oder Eisenerz verbunden.

Eine weitere bevorzugte Ausführungsform der Anlage ist dadurch gekennzeichnet, dass die Entschwefelungsvorrichtung als Wirbelschichtreaktorkaskade ausgebildet ist, wobei eine Zuführung für Feinerz in den in der Kaskade in Richtung des Materialtransports zuerst angeordneten Wirbelschichtreaktor mündet, zwischen den Wirbelschichtreaktoren sowohl eine leitungsmäßige Verbindung für das Vergasungsgas als auch eine für das Feinerz und das Entschwefelungsmittel vorgesehen ist, und die Ableitung für das im Schmelzvergaser erzeugte Vergasergas in den zuletzt angeordneten Wirbelschichtreaktor mündet, der zur Zuführung von verbrauchtem Entschwefelungsmittel sowie vorgewärmtem und vorreduziertem Feinerz leitungsmäßig mit dem Schmelzvergaser verbunden ist, und dass im Schmelzvergaser ein Abstich für Roheisen vorgesehen ist.

### Beschreibung der Erfindung

Die Vergasung des kohlenstoffhaltigen Brennstoffes oder der Kohle erfolgt mit reinem Sauerstoff oder hoch sauerstoffhältigem Gas, damit als Vergasungsgas nur Kohlenmonoxid, Wasserstoff und geringe Mengen von Kohlenstoffdioxid und Wasserdampf entstehen und keine oder nur sehr geringe Mengen an Stickstoff in den Prozess gelangen. Durch Einstellung einer Temperatur von >800°C im Gasraum des Schmelzvergasers kann nach einer Verweilzeit des Gases von mehreren Sekunden die organische Belastung des Gases wirkungsvoll verringert werden.

Für die Chargierung der Rohstoffe vom Atmosphärendruck in den Hochdruckraum der Anlage muss mit sogenannten Druckschleusen (Interlockings) ein Zwischenbehälter abwechselnd be- und entspannt werden, um den Stofftransport durchführen zu können. Als Inertgas für diese Bespannungsvorgänge wird üblicherweise Stickstoff verwendet. Als Inertgas für alle Spülungen im Prozess wird/werden erfindungsgemäß jedoch vornehmlich CO₂ oder Mischungen aus CO, H₂, CO₂ und Wasserdampf verwendet, um den Eintrag an Stickstoff oder anderen schwer abscheidbaren Gasen zu vermeiden.

Als Vergaser wird ein modifizierter Schmelzvergaser verwendet, welcher mit einem Festbett oder teilweise fluidisiertem Kohle/Charbett arbeitet, wobei nur Flüssigschlacke aus der Kohleasche anfällt.

Erfindungsgemäß wird zur Gasentschwefelung eine durch das Vergasergas durchströmte Entschwefelungskammer oder ein Wanderbettreaktor vorgesehen, aus welcher/welchem das Entschwefelungsmittel, z.B. Kalk, nach dem Gebrauch in den Einschmelzvergaser chargiert wird, um eine für die Zementindustrie verwendbare Schlacke zu erzeugen. Damit kann Abfall vermieden werden. Diese Schlacke nimmt auch andere Schadstoffe aus den Aschen der Einsatzstoffe auf. Diese werden im Zement sicher eingebunden und stellen damit kein Umweltrisiko mehr dar.

Gemäß einer Ausführungsform der Erfindung werden in die Entschwefelungszone neben Entschwefelungsmittel Eisenteilchen oder Eisenerz chargiert, welche ebenfalls die Schwefelverbindungen aus dem Vergasergas binden und durch Chargieren in den Vergaser zu zementfähiger Schlacke und Flüssigeisen umgewandelt werden. Das abgestochene Eisen kann wieder dem Entschwefler zugeführt werden und damit ohne nennenswerten Eisenverbrauch im Kreis geführt werden. Das im Herd des Schmelzvergasers befindliche Flüssigeisen erleichtert darüber hinaus vorteilhafterweise den Abstich der Schlacke, vor allem nach Betriebsstillständen, wenn Schlacke erstarrt ist und mit herkömmlichen Mitteln nicht mehr aufgeschmolzen werden kann. Im Herd befindliches Eisen kann mittels Sauerstoff durch den Abstich geschmolzen werden und es bildet sich mit erstarrter Schlacke ein fließfähiges Gemisch aus oxidiertem Eisen und Schlacke. So kann ein "eingefrorener" Schmelzvergaser wieder in Betrieb genommen werden.

In die Entschwefelungszone können aber auch Eisenteilchen oder Eisenerz sowie Zuschlagsstoffe wie z.B. Kalk, chargiert werden. Das abgestochene Roheisen kann auf herkömmliche Weise z.B. zu Stahl weiterverarbeitet werden.

Anstelle des Wanderbettreaktors für die Entschwefelung kann auch ein Wirbelschichtreaktor oder zur Vergleichmäßigung der Verweilzeit des Aufgabematerials eine Wirbelschichtkaskade verwendet werden. Damit kann auch feinkörniger Einsatz mit Korngrößen <10 mm verwendet werden.

Dabei fällt, wie auch beim Hochofen aber auch bei Direktreduktionsanlagen, ein Überschussgas an, welches noch erheblichen Energieinhalt besitzt (Exportgas).

Beispiele der Gaszusammensetzung derartiger Exportgase:

| | CO % | H₂ % | CO₂ % | CH₄ % | H₂S ppm | N₂ % | Hᵤ MJ/mₙ³ |
|---|---|---|---|---|---|---|---|
| COREX^{®} | 35-40 | 15-20 | 33-36 | 1-3 | 10-70 | 4-6 | 7,5 |
| Gichtgas | 17-20 | 1-2 | 20-25 | | | Rest | 3.5-4 |
| FINEX^{®} | 35-40 | 15-20 | 35 | 1-3 | 10-70 | 4-6 | 7,5 |

Dieses Gas kann wie Vergasungsgas in einer Gasturbine verbrannt werden. Dazu wird, um keinen oder nur sehr wenig Stickstoff einzutragen, im Einschmelzvergaser reiner Sauerstoff oder ein hoch sauerstoffhältiges Gas mit mindestens 95 Vol.% O₂, vorzugsweise mindestens 99 Vol.% O₂, verwendet.

Um die hohen Verbrennungstemperaturen auf den für die Turbine optimalen Bereich abzusenken, wird als Moderator erfindungsgemäß rückgeführtes reines Kohlenstoffdioxid verwendet. In der Gasturbine wird zur Temperatureinstellung im Brennraum CO₂ verwendet, welches gegenüber Stickstoff eine wesentlich höhere spezifische Wärmekapazität besitzt und damit geringere Gasvolumina anfallen. Dies führt zu kleineren und damit preisgünstigeren Anlagen. Dieses CO₂ kann durch Rückführung eines Teils des Rauchgases zur Verfügung gestellt werden. Durch die Abwesenheit von N₂ im Brenngasgemisch (bedingt durch die Verwendung reinen Sauerstoffs oder eines Gases mit mindestens 99 Vol.% O₂) kann auch kein schädliches NO_{X} gebildet werden.

Durch den erfindungsgemäß erzielten sehr hohen Gehalt an CO₂ im Abgas aus der Gasturbine ist durch die erhöhte Strahlung gegenüber stickstoffhaltigen Rauchgasen eine bessere Energieausnutzung im nachgeschalteten Dampfkessel möglich. Damit kann eine spezifisch höhere Leistung der Kesselanlage erzielt werden.

Ein weiterer Vorteil ist, dass durch die geringeren Gasvolumina auch die nachgeschalteten Abhitzekessel, die Gasleitungen und Gasbehandlungseinrichtungen kleiner und kostengünstiger gestaltet werdem können.

Eine Aufkonzentration des im Abgas des Dampfkessels enthaltenen CO₂ ist nicht nötig (wie es bei den derzeit angewandten Verfahren nötig ist), da keine Ballastgase im Rauchgas enthalten sind und der enthaltene Wasserdampf kein Problem darstellt.

Die Abscheidung des in den Rauchgasen enthaltenen Wasserdampfs ist durch Kondensation nach verschiedenen bekannten Verfahren, wie Einspritzkühlung oder indirekten Wärmetausch, einfach und kostengünstig durchführbar.

Das so gewonnene CO₂ kann durch Rückführung zur Gasturbine einerseits als Temperaturmoderator ohne wesentliche Kosten verwendet und andererseits auf bekannte Weise einer Sequestrierung zugeführt werden.

Durch das erfindungsgemäße Verfahren ist außerdem keine aufwändige H₂S/COS-Entfernung notwendig. Auch eine Anlage dafür ist nicht zu installieren. Auch eine Shift-Reaktion und damit eine teure und energieaufwändige Anlage ist ebenfalls nicht erforderlich.

### Beispiel

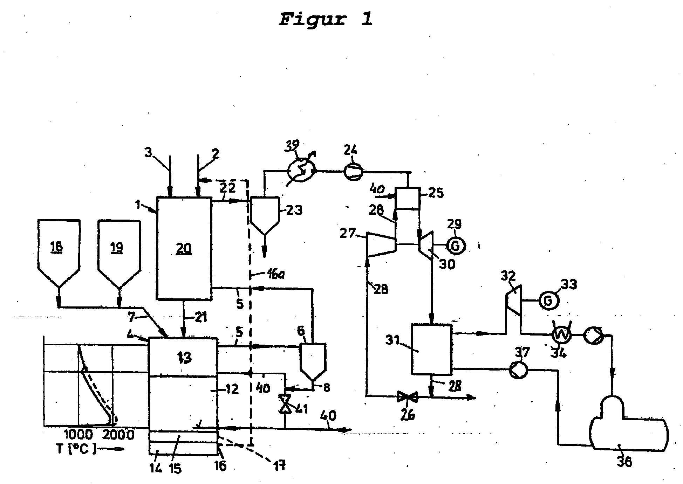

Fig. 1 stellt eine Ausführungsform der gegenständlichen Erfindung dar.

In den Wanderbettreaktor 1 werden Erz 2 und Zuschlagsstoffe 3, wie Kalk, über Aufgabevorrichtungen chargiert. Der so gebildete Möller 20 wird im Gegenstrom mit dem entstaubten Gas aus dem Zyklon 6 vorgewärmt, teilweise kalziniert und teilreduziert. Hierauf wird dieser (teil)reduzierte Möller 21 mittels Austragsvorrichtungen durch den Freiraum 13 des Schmelzvergasers 4 in dessen Charbett 12 gefördert. Das Charbett 12 wird durch Hochtemperaturpyrolyse von Kohlenstoffträgern 7, welche aus den Kohlebunkern 18,19 kommen, durch die heißen Vergasungsgase der Sauerstoff 40 einblasenden Düsen gebildet. In diesem heißen Charbett 12 wird der (teil)reduzierte Möller 21 fertig reduziert und kalziniert und anschließend zu Roheisen 14 und Schlacke 15 aufgeschmolzen. Die Temperaturverhältnisse im Charbett 12 sind in dem in Figur 1 dargestellten Diagramm beispielhaft zu entnehmen.

Das Roheisen 14 und die Schlacke 15 werden über die Abstichöffnung 16 in Intervallen abgestochen. Gemäß einer weiteren Ausführungsform wird die Schlacke 15 getrennt vom Roheisen 14 über eine eigene Abstichöffnung 17 (strichliert dargestellt) abgestochen. Das abgestochene Roheisen kann dann wieder zwecks erneutem Einsatz als Entschwefelungsmittel in den Wanderbettreaktor 1 rückgeführt werden (Verbindung 16a, strichliert dargestellt).

Das Rohgas (Vergasergas) 5 verlässt den Schmelzvergaser 4 am oberen Ende des Freiraums 13 und wird im Zyklon 6 von den heißen Stäuben 8 gereinigt, welche mit über ein Regelventil 41 zugeführtem Sauerstoff 40 in den Freiraum 13 des Schmelzvergasers 4 zurückgeführt und dort vergast und aufgeschmolzen werden. Die dabei entstehende Schmelze wird vom Charbett 12 aufgenommen und abwärts zum Schlacke- und Roheisenbad 14,15 transportiert. Das entstaubte Gas 5 tritt mit Temperaturen von beispielsweise 800 °C in den Wanderbettreaktor 1 ein und verrichtet danach die vorhin beschriebenen Reaktionen und wird dabei zu einem thermodynamisch vorgebenen Grad oxidiert und abgekühlt. Am oberen Ende des Wanderbettreaktors 1 verläßt das Rohexportgas 22 denselben. Da es noch staubhaltig ist, wird es in einem nachgeschalteten Staubabscheider 23 gereinigt und in einem Kühler 39 gekühlt. Dieser kann derart gestaltet sei, dass ein Großteil der Enthalpie dieses Gases rückgewonnen werden kann.

Das gereinigte und gekühlte Gas wird im Verdichter 24 auf den für die Verbrennung in der Brennkammer 25 der Gasturbine 30 notwendigen Druck gebracht und zusammen mit Sauerstoff 40 und den in der Verdichterstufe 27 komprimierten Rauchgasen 28 (im Wesentlichen Kohlenstoffdioxid) in der Brennkammer 25 verbrannt. Die Verbrennungsgase durchlaufen hierauf die Gasturbine 30, wobei die dabei erzeugte mechanische Energie an den gekoppelten Generator 29 abgegeben wird.

Das noch heiße Abgas aus der Gasturbine 30 wird nun dem nachgeschalteten Dampfkessel 31 zugeführt. In diesem wird Heißdampf erzeugt, der in der nachgeschalteten Dampfturbine 32 zur Erzeugung mechanischer Energie verwendet wird, welche auf den Generator 33 übertragen wird. Der abgearbeitete Dampf wird in einem Kondensator 34 kondensiert und einem Zwischenspeicher 36 zugeführt. Über die Kondensatpumpe 37 wird das Kondensat wieder dem Dampfkessel 31 zugeführt.

Die aus dem Dampfkessel 31 austretenden Rauchgase 28 bestehen aus reinem Kohlenstoffdioxid und etwas Wasserdampf. Sie können nun zur Temperatureinstellung in die Brennkammer 25 über die Regelvorrichtung 26 und den Verdichter 27 geleitet werden. Der Rest kann nach Kondensation des Wasserdampfgehaltes einer Sequestrierung zugeführt, oder ohne Behandlung in die Atmosphäre geleitet werden.

Im Falle des Einsatzes von Feinerz wird anstelle des Wanderbettreaktors 1 ein Wirbelschichtreaktor oder eine Kaskade aus mindestens zwei Wirbelschichtreaktoren installiert.

## Patentansprüche

1. Verfahren zur Erzeugung von elektrischer Energie in einem Gas- und Dampfturbinen (GuD) -Kraftwerk mit einem aus Kohlenstoffträgern und sauerstoffhältigem Gas erzeugten Vergasungsgas, wobei die Kohlenstoffträger in einer Schmelzvergasungszone mit Sauerstoff oder einem hoch sauerstoffhältigen Gas, das einen Sauerstoffanteil von mindestens 95 Vol.%, vorzugsweise mindestens 99 Vol.%, aufweist, vergast werden und das so erzeugte Vergasungsgas durch eine Entschwefelungsmittel enthaltende Entschwefelungszone geleitet wird, wobei verbrauchtes Entschwefelungsmittel in die Schmelzvergasungszone chargiert und nach Bildung einer Flüssigschlacke abgezogen wird, wobei das entschwefelte Vergasungsgas, vorzugsweise nach Reinigung und Kühlung, in einer Brennkammer zusammen mit reinem Sauerstoff verbrannt wird und die entstehenden Verbrennungsgase, H₂O und CO₂, zur Energieerzeugung in die Gasturbine geleitet werden**dadurch gekennzeichnet, dass** die Verbrennungsgase nach der Gasturbine in einem Dampfkessel in Wasserdampf und Kohlendioxid getrennt werden, wobei der Wasserdampf anschließend in eine Dampfturbine geleitet wird, und das Kohlendioxid zur Temperatureinstellung in die Brennkammer zumindest teilweise rückgeführt wird und dass in der Entschwefelungszone zusätzlich Eisenerz eingesetzt wird, das gemeinsam mit dem verbrauchten Entschwefelungsmittel in die Schmelzvergasungszone chargiert, dort geschmolzen und abgezogen wird.

2. Verfahren nach Anspruch 1, **dadurch gekennzeichnet, dass** in der Entschwefelungszone als Hilfsstoff zusätzlich Eisen eingesetzt wird, das gemeinsam mit dem verbrauchten Entschwefelungsmittel in die Schmelzvergasungszone chargiert, dort geschmolzen und abgezogen wird.

3. Verfahren nach Anspruch 2, **dadurch gekennzeichnet, dass** das aus der Schmelzvergasungszone abgezogene Eisen in die Entschwefelungszone rückgeführt wird.

4. Verfahren nach Anspruch 1, **dadurch gekennzeichnet, dass** das in der Entschwefelungszone zusätzlich eingesetzte Eisenerz in der Entschwefelungszone vorgewärmt und vorreduziert, gemeinsam mit dem verbrauchten Entschwefelungsmittel in die Schmelzvergasungszone chargiert, dort fertig reduziert, geschmolzen und als Roheisen abgezogen wird.

5. Verfahren nach Anspruch 4, **dadurch gekennzeichnet, dass** die Entschwefelung des Vergasergases sowie die Vorerwärmung und Vorreduktion des Eisenerzes in zwei oder mehreren hintereinandergeschalteten Wirbelschichtzonen durchgeführt wird, wobei das Eisenerz von Wirbelschichtzone zu Wirbelschichtzone geleitet wird und das Vergasergas die Wirbelschichtzonen in Gegenrichtung zum Eisenerz durchströmt.

6. Verfahren nach einem der Ansprüche 1 bis 5, **dadurch gekennzeichnet, dass** in der Schmelzvergasungszone eine Temperatur >800°C, vorzugsweise >850°C eingestellt wird.

7. Verfahren nach einem der Ansprüche 1 bis 6, **dadurch gekennzeichnet, dass** für alle Spülungen im Prozess CO₂ oder Mischungen aus CO, H₂, CO₂ und Wasserdampf eingesetzt wird/werden.

8. Verfahren nach einem der Ansprüche 1 bis 7, **dadurch gekennzeichnet, dass** die in der Schmelzvergasungszone gebildete Flüssigschlacke in der Zementerzeugung eingesetzt wird.

9. Anlage zur Durchführung des Verfahrens nach Anspruch 1, umfassend einen Vergaser für Kohlenstoffträger (4), der eine Zuführung für Kohlenstoffträger (7), eine Zuleitung für ein sauerstoffhaltiges Gas (40), eine Ableitung für Flüssigschlacke (15) und eine Ableitung für das erzeugte Vergasergas (5) aufweist, und eine Entschwefelungsvorrichtung (1), die eine Zuführung für Entschwefelungsmittel (3) und eine Ableitung für das gereinigte Vergasergas (22) aufweist und in die eine Zuführung für das Vergasergas (5) mündet und eine kombinierte Gas- und Dampfturbinenkraftwerksanlage mit einer Brennkammer (25) der Gasturbinenanlage, in welche eine Leitung für das gereinigte Vergasergas (22) und eine Zuführung (40), für sauerstoffhältiges Gas oder für ein hoch sauerstoffhältiges Gas, das einen Sauerstoffanteil von mindestens 95 Vol.%, vorzugsweise mindestens 99 Vol.%, mündet und einem Dampfkessel (31) der Dampfturbinenanlage, in den eine von der Gasturbine (30) ausgehende Leitung für die Verbrennungsgase mündet und der eine Ableitung für Rauchgase (28) aufweist, wobei der Vergaser (4) als Schmelzvergaser ein Kohle- und/oder Charbett (12) aufweist und mit einem Abstich (16, 17) für Flüssigschlacke (15) versehen ist, und die Ableitung für das im Schmelzvergaser erzeugte Vergasergas (5) in die Entschwefelungsvorrichtung mündet, wobei die Entschwefelungsvorrichtung als mindestens ein Reaktor (1) mit Wander- oder Wirbelbett ausgebildet ist, **dadurch gekennzeichnet, dass** der Reaktor (1) mit dem Schmelzvergaser (4) zur Zuführung von verbrauchtem Entschwefelungsmittel (21) leitungsmäßig verbunden ist und dass von der Ableitung für Rauchgase (28) aus der Gasturbine (30) eine mit einer Regelvorrichtung (26) versehene Zweigleitung abzweigt, die in der Brennkammer (25) mündet und wobei im Dampfkessel (31) die Verbrennungsgase nach der Gasturbine in Wasserdampf und Kohlendioxid getrennt werden, sodass der Wasserdampf anschließend in eine Dampfturbine (32) geleitet werden kann, wobei der mindestens eine Reaktor (1) eine Zuführung für Eisen und/oder Eisenerz (2) aufweist und im Schmelzvergaser (4) zusätzlich ein Abstich (16) für Roheisen (14) vorgesehen ist.

10. Anlage nach Anspruch 9, **dadurch gekennzeichnet, dass** der Abstich (16) für Roheisen (14) leitungsmäßig mit der Zuführung für Eisen und/oder Eisenerz (2) verbunden ist.

11. Anlage nach Anspruch 9, **dadurch gekennzeichnet, dass** die Entschwefelungsvorrichtung als Wirbelschichtreaktorkaskade ausgebildet ist, wobei eine Zuführung für Feinerz in den in der Kaskade in Richtung des Materialtransports zuerst angeordneten Wirbelschichtreaktor mündet, zwischen den Wirbelschichtreaktoren sowohl eine leitungsmäßige Verbindung für das Vergasungsgas als auch eine für das Feinerz und das Entschwefelungsmittel vorgesehen ist, und die Ableitung für das im Schmelzvergaser erzeugte Vergasergas in den zuletzt angeordneten Wirbelschichtreaktor mündet, der zur Zuführung von verbrauchtem Entschwefelungsmittel sowie vorgewärmtem und vorreduziertem Feinerz leitungsmäßig mit dem Schmelzvergaser verbunden ist, und dass im Schmelzvergaser ein Abstich für Roheisen vorgesehen ist.

## Claims

1. Process for generating electrical energy in a gas and steam turbine (combined cycle) power generating plant with a gasification gas produced from carbon carriers and oxygen-containing gas, wherein the carbon carriers are gasified in a gassing zone with oxygen or a gas containing a large amount of oxygen, with an oxygen content of at least 95% by volume, preferably at least 99% by volume, and the gasification gas produced in this way is passed through a desulfurizing zone containing a desulfurizing agent, used desulfurizing agent being fed into the gassing zone and drawn off after the formation of a liquid slag, wherein the desulfurized gasification gas, preferably following cleaning and cooling, is burned in a combustion chamber together with pure oxygen and the resulting combustion gases H₂O and CO₂ are introduced into the gas turbine for energy generation, **characterized in that** downstream of the gas turbine, the combustion gases are separated in a steam boiler into water vapour and carbon dioxide, wherein the water vapour is subsequently introduced into a steam turbine, and the carbon dioxide is at least partially returned to the combustion chamber for setting the temperature, and **in that** iron ore is additionally used in the desulfurizing zone, fed together with the used desulfurizing agent into the gassing zone, melted there and drawn off.

2. Process according to Claim 1, **characterized in that** iron is additionally used as an auxiliary agent in the desulfurizing zone, fed together with the used desulfurizing agent into the gassing zone, melted there and drawn off.

3. Process according to Claim 2, **characterized in that** the iron drawn off from the gassing zone is returned to the desulfurizing zone.

4. Process according to Claim 1, **characterized in that** the iron ore additionally used in the desulfurizing zone is pre-heated and pre-reduced in the desulfurizing zone, fed together with the used desulfurizing agent into the gassing zone, completely reduced there, melted and drawn off as pig iron.

5. Process according to Claim 4, **characterized in that** the desulfurizing of the gasifier gas and the pre-heating and pre-reduction of the iron ore are carried out in two or more fluidized bed zones arranged one behind the other, the iron ore being passed from fluidized bed zone to fluidized bed zone and the gasifier gas flowing through the fluidized bed zones in a direction counter to that of the iron ore.

6. Process according to one of Claims 1 to 5, **characterized in that** a temperature > 800°C, preferably > 850°C, is set in the gassing zone.

7. Process according to one of Claims 1 to 6, **characterized in that** CO₂ or mixtures of CO, H₂, CO₂ and water vapour is/are used for all purging operations in the process.

8. Process according to one of Claims 1 to 7, **characterized in that** the liquid slag formed in the gassing zone is used in cement production.

9. Installation for carrying out the process according to Claim 1, comprising a gasifier for carbon carriers (7), which has a feed for carbon carriers (7), a feed line for an oxygen-containing gas (40), a discharge line for liquid slag (15) and a discharge line for the gasifier gas (5) produced, and comprising a desulfurizing device (1), which has a feed for desulfurizing agent (3) and a discharge line for the cleaned gasifier gas (22) and into which there leads a feed for the gasifier gas (5), and comprising a combined gas and steam turbine power generating plant with a combustion chamber (25) of the gas turbine installation, into which there leads a line for the cleaned gasifier gas (22) and a feed (40) for oxygen-containing gas or for a gas containing a large amount of oxygen, which has an oxygen content of at least 95% by volume, preferably at least 99% by volume, and comprising a steam boiler (31) of the steam turbine installation, into which there leads a line for the combustion gases extending from the gas turbine (30) and which has a discharge line for flue gases (28), wherein the gasifier (4) has as a fusion gasifier a coal and/or char bed (12) and is provided with a tap (16, 17) for liquid slag (15), and the discharge line for the gasifier gas (5) produced in the fusion gasifier leads into the desulfurizing device, wherein the desulfurizing device is formed as at least one reactor (1) with a moving bed or fluidized bed, **characterized in that** the reactor (1) is connected in conducting terms to the fusion gasifier (4) for feeding in used desulfurizing agent (21), and **in that** a branch line which is provided with a control device (26) and leads into the combustion chamber (25) branches off from the discharge line for flue gases (28) from the gas turbine (30) and wherein, in the steam boiler (31), downstream of the gas turbine, the combustion gases are separated into water vapour and carbon dioxide, so that the water vapour can be subsequently introduced into a steam turbine (32), wherein the at least one reactor (1) has a feed for iron and/or iron ore (2) and a tap (16) for pig iron (14) is additionally provided in the fusion gasifier (4).

10. Installation according to Claim 9, **characterized in that** the tap (16) for pig iron (14) is connected in conducting terms to the feed for iron and/or iron ore (2).

11. Installation according to Claim 9, **characterized in that** the desulfurizing device is formed as a fluidized bed reactor cascade, a feed for fine ore leading into the fluidized bed reactor arranged first in the cascade in the direction of material transport, both a connection in conducting terms for the gasification gas and one for the fine ore and the desulfurizing agent being provided between the fluidized bed reactors, and the discharge line for the gasifier gas produced in the fusion gasifier leading into the fluidized bed reactor arranged last, which is connected in conducting terms to the fusion gasifier for feeding in used desulfurizing agent and pre-heated and pre-reduced fine ore, and **in that** a tap for pig iron is provided in the fusion gasifier.

## Revendications

1. Procédé de production d'énergie électrique dans une centrale avec turbines à gaz et à vapeur (GuD) avec un gaz de gazéification produit à partir de porteurs de carbone et de gaz contenant de l'oxygène, dans lequel les porteurs de carbone sont gazéifiés dans une zone de gazéification par fusion avec de l'oxygène ou un gaz à haute teneur en oxygène, qui présente une proportion d'oxygène d'au moins 95 % en volume, de préférence d'au moins 99 % en volume, et le gaz de gazéification ainsi produit est conduit à travers une zone de désulfuration contenant un agent de désulfuration, dans lequel l'agent de désulfuration consommé est chargé dans la zone de gazéification par fusion et est extrait après formation d'un laitier liquide, dans lequel le gaz de gazéification désulfuré, de préférence après épuration et refroidissement, est brûlé dans une chambre de combustion en même temps que de l'oxygène pur et les gaz de combustion produits, H₂O et CO₂, sont conduits dans la turbine pour la production d'énergie, **caractérisé en ce que** les gaz de combustion sont séparés, après la turbine à gaz dans une chaudière à vapeur, en vapeur d'eau et en dioxyde de carbone, dans lequel la vapeur d'eau est ensuite conduite dans une turbine à vapeur, et le dioxyde de carbone est au moins en partie renvoyé à la chambre de combustion pour le réglage de la température, et **en ce que** l'on ajoute en outre dans la zone de désulfuration du minerai de fer, qui est chargé en même temps que l'agent de désulfuration consommé dans la zone de désulfuration par fusion, y est fondu et en est extrait.

2. Procédé selon la revendication 1, **caractérisé en ce que** l'on ajoute en plus dans la zone de désulfuration, comme substance auxiliaire, du fer qui est chargé dans la zone de gazéification par fusion en même temps que l'agent de désulfuration consommé, y est fondu et en est extrait.

3. Procédé selon la revendication 2, **caractérisé en ce que** le fer extrait hors de la zone de gazéification par fusion est renvoyé dans la zone de désulfuration.

4. Procédé selon la revendication 1, **caractérisé en ce que** le fer ajouté en plus dans la zone de désulfuration est préchauffé et préréduit dans la zone de désulfuration, est chargé en même temps que l'agent de désulfuration consommé dans la zone de gazéification par fusion, y est finalement réduit, fondu et extrait sous forme de fonte.

5. Procédé selon la revendication 4, **caractérisé en ce que** la désulfuration du gaz de gazéification ainsi que le préchauffage et la préréduction du minerai de fer sont effectués dans deux ou plusieurs zones à couche fluidisée successives, dans lequel le minerai de fer est conduit de zone à couche fluidisée à zone à couche fluidisée et le gaz de gazéification traverse les zones à couche fluidisée à contre-sens avec le minerai de fer.

6. Procédé selon l'une des revendications 1 à 5, **caractérisé en ce que** l'on règle dans la zone de gazéification par fusion une température > 800°C, de préférence > 850°C.

7. Procédé selon l'une des revendications 1 à 6, **caractérisé en ce que** l'on introduit dans le processus, pour tous les balayages, du CO₂ ou des mélanges de CO, H₂, CO₂ et vapeur d'eau.

8. Procédé selon l'une des revendications 1 à 7, **caractérisé en ce que** le laitier liquide formé dans la zone de gazéification par fusion est utilisé dans la production de ciment.

9. Installation destinée à la mise en oeuvre du procédé selon la revendication 1, comprenant un gazéificateur pour des porteurs de carbone (4), qui présente une arrivée pour des porteurs de carbone (7), une conduite d'alimentation pour un gaz contenant de l'oxygène (40), une conduite d'évacuation pour le laitier liquide (15) et une conduite d'évacuation pour le gaz de gazéification produit (5), et un dispositif de désulfuration (1), qui présente une arrivée pour un agent de désulfuration (3) et une conduite d'évacuation pour le gaz de gazéification épuré (22) et dans laquelle une arrivée pour le gaz de gazéification (5) débouche, et une installation de centrale combinée avec turbines à gaz et à vapeur avec une chambre de combustion (25) de l'installation de turbine à gaz, dans laquelle débouchent une conduite pour le gaz de gazéification épuré (22) et une arrivée (40) pour un gaz contenant de l'oxygène ou un gaz à haute teneur en oxygène, qui présente une proportion d'oxygène d'au moins 95 % en volume, de préférence d'au moins 99 % en volume, et avec une chaudière à vapeur (31) de l'installation de turbine à vapeur, dans laquelle débouche une conduite partant de la turbine à gaz (30) pour les gaz de combustion et qui présente une conduite d'évacuation pour les gaz de fumée (28), dans laquelle le gazéificateur (4) présente comme gazéificateur par fusion un lit de charbon et/ou de charbon carbonisé (12) et est muni d'une goulotte de coulée (16, 17) pour le laitier liquide (15), et la conduite d'évacuation pour le gaz de gazéification (5) produit dans le gazéificateur par fusion débouche dans le dispositif de désulfuration, dans laquelle le dispositif de désulfuration est réalisé sous forme d'au moins un réacteur (1) avec un lit migrant ou un lit fluidisé, **caractérisé en ce que** le réacteur (1) est raccordé en écoulement au gazéificateur par fusion (4) pour la fourniture d'agent de désulfuration consommé (21) et **en ce qu'**une conduite de déviation munie d'un dispositif de réglage (26) part de la conduite d'évacuation pour les gaz de fumée (28) provenant de la turbine à gaz (30) et débouche dans la chambre de combustion (25), et dans laquelle les gaz de combustion sont séparés dans la chaudière à vapeur (31) après la turbine à gaz, en vapeur d'eau et en dioxyde de carbone, de telle manière que la vapeur d'eau puisse ensuite être conduite dans une turbine à vapeur (32), dans laquelle ledit au moins un réacteur (1) présente une arrivée pour du fer et/ou du minerai de fer (2) et il est prévu en plus dans le gazéificateur par fusion (4) une goulotte de coulée (16) pour de la fonte (14).

10. Installation selon la revendication 9, **caractérisée en ce que** la goulotte de coulée (16) pour la fonte (14) est raccordée en relation d'écoulement avec l'arrivée pour le fer et/ou le minerai de fer (2).

11. Installation selon la revendication 9, **caractérisée en ce que** le dispositif de désulfuration est réalisé sous la forme d'une cascade de réacteurs à couche fluidisée, dans laquelle une arrivée pour du minerai fin débouche dans le réacteur à couche fluidisée disposé d'abord dans la cascade dans la direction du transport des matières, il est prévu entre les réacteurs à couche fluidisée aussi bien un raccordement en relation d'écoulement pour le gaz de gazéification qu'un raccordement pour le minerai fin et l'agent de désulfuration, et la conduite d'évacuation pour le gaz de gazéification produit dans le gazéificateur par fusion débouche dans le réacteur à couche fluidisée disposé en dernier lieu, qui est raccordé en relation d'écoulement au gazéificateur par fusion pour la fourniture d'agent de désulfuration consommé ainsi que de minerai fin préchauffé et préréduit, et **en ce qu'**il est prévu dans le gazéificateur par fusion une goulotte de coulée pour de la fonte.
